# EUROPEAN PATENT SPECIFICATION

(11) **EP 1 263 175 B1**
(45) Date of publication and mention of the grant of the patent: **11.08.2004**
(21) Application number: 02011482.3
(22) Date of filing: 24.05.2002
(51) Int. Cl.: H04L 12/56, H04L 12/28, H04L 29/06

(54) **Wireless device, information processing apparatus, and device driver load method**
Drahtlose Einrichtung, Informationsverarbeitungsgerät und Verfahren zum Gerätetreiber laden
Dispositif sans fil, appareil de traitement de l'information et méthode de chargement de driver

(30) Priority: 25.05.2001 JP 2001157298
(43) Date of publication of application: 04.12.2002
(73) Proprietor: Kabushiki Kaisha Toshiba, Tokyo (JP)
(72) Inventor: Tanuma, Hidenobu K.K. Toshiba,, Minato-ku, Tokyo 105-8001 (JP)
(74) Representative: Henkel, Feiler & Hänzel

(56) References cited:
- "TRANSPARENT AUTOMODING PROCEDURE BETWEEN A LOCAL (CLIENT) MODEM AND A REMOTE (SERVE) MODEM" RESEARCH DISCLOSURE, KENNETH MASON PUBLICATIONS, HAMPSHIRE, GB, no. 424, August 1999 (1999-08), page 1138 XP000889118 ISSN: 0374-4353
- "Logical Link Control and Adaption Protocol Specification" BLUETOOTH SPECIFICATION VERSION, XX, XX, 29 November 1999 (1999-11-29), pages 249-258, XP002137403
- "HOST CONTROLLER INTERFACE FUNCTIONAL SPECIFICATION" BLUETOOTH SPECIFICATION VERSION, XX, XX, 29 November 1999 (1999-11-29), pages 517-539, XP002174954

## Description

The present invention relates to a wireless device which exchanges data with another device, an information processing apparatus, and a device driver load method.

In recent years, there have been proposed many techniques for eliminating troublesome cable connections among devices and improving convenience by connecting a personal computer and its peripheral devices, audio/visual devices, and the like via a wireless interface (wireless device) to exchange data.

In such techniques, a wireless device including, e.g., a wireless card or the like, has a single function, and in order to attain multi-functions of that device, a host that uses the wireless device must implement a desired protocol stack.

For this purpose, the host must prepare an I/O port unique to each use mode to assure resources every time a wireless device is connected, and various selection and setup operations and the like such as installation of a compatible driver, firmware, and the like are required, thus disturbing smooth and quick connection.

"Transparent Automoding Procedure between a Local (Client) Modem and a Remote (Server) Modem" Research disclosure, Kenneth Mason publications, Hampshire, GB, no. 424, August 1999, page 1138XP000889118 ISSN: 0374-4353 discloses a device according the pre-characterizing part of claim 1. The disclosure of this document is not directed to a wireless device.

On the other hand "Logical Link Control and Adaption Protocol Specification", Bluetooth specification version, 29 November 1999, pages 249-258, XP002137403 discloses the logical link control and adaptation layer protocol, referred to as L2CAP. L2CAP is layered over the baseband protocol and resides in the data link layer. It provides connection-oriented and connectionless data services to upper layer protocols with protocol multiplexing capability, segmentation and reassembly operation, and group abstractions. L2CAP permits higher level protocols and applications to transmit and receive L2CAP data packets up to 64 k byte in length.

Accordingly, it is an object of the present invention to provide a wireless device, information processing apparatus, and device driver load method, which can easily implement multi-functions while reducing the load on a host, thereby improving convenience.

Accordingly, it is an object of the present invention to provide a wireless device which can overcome the above mentioned deficiencies.

The above object is achieved by a device according to claim 1. The dependent claims are related to further advantageous aspects of the invention.

According to one aspect there is provided a wireless device attachable to a host, comprising: an interface unit configured to receive data indicating an operation mode to be selected from the host; and a controller configured to select the one of a first operation mode and a second operation mode in accordance with the data received by the interface unit, and execute the selected operation mode.

According to another aspect , there is provided an information processing apparatus, comprising: an attachment unit to which a wireless device is attachable; and a device driver loader configured to select an operation mode of the wireless device on the basis of attribute information obtained from the wireless device when the wireless device is attached to the attachment unit, and boot corresponding software in accordance with the selected operation mode to interlock a processing function with the operation mode of the wireless device.

According to still another aspect , there is provided a device driver load method applied to an information processing apparatus to which a wireless device is attachable, the method comprising: selecting an operation mode of the wireless device on the basis of attribute information obtained from the wireless device when the wireless device is attached to the attachment unit; and booting corresponding software in accordance with the selected operation mode to interlock a processing function with the operation mode of the wireless device.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the arrangement of principal part of a wireless card and an information processing apparatus using that wireless card in an embodiment of the present invention;
FIG. 2 is a flow chart showing the processing sequence from insertion to boot of the wireless card in the embodiment;
FIG. 3 shows a practical description example of a portion, associated with the present invention, of card attribute information in the embodiment;
FIG. 4 is a table showing an example of the specifications of ports in the embodiment;
FIG. 5 shows a connection arrangement of respective units in an L2CAP mode of the wireless card in the embodiment;
FIG. 6 shows a connection arrangement of respective units in a Profile mode of the wireless card in the embodiment; and
FIG. 7 is a flow chart showing the processing sequence by a device driver prepared by a host for each mode in the embodiment.

Embodiments of the present invention will be described below with reference to the drawings.

In one embodiment, a wireless card (wireless device) that complies with Bluetooth™ standards will be exemplified. Also, basic operation modes of a host controller interface, logical link layer, and profile will be respectively referred to as HCI (Host Controller Interface), L2CAP (Logical Link Control and Adaptation Protocol), and Profile modes hereinafter.

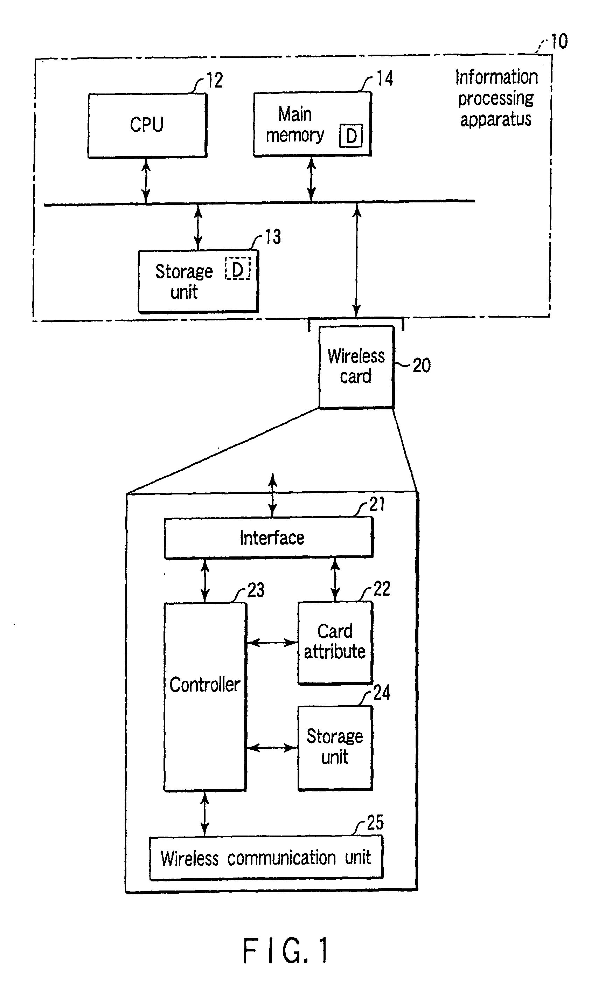

FIG. 1 is a block diagram showing the arrangement of principal part of a wireless card and an information processing apparatus using the wireless card in an embodiment of the present invention.

Referring to FIG. 1, reference numeral 10 denotes an information processing apparatus (to be referred to as a host hereinafter) such as a personal computer (PC) or the like for exchanging data using a wireless card. The host 10 includes a card slot 11 to/from which a wireless card is attachable/detachable, a CPU 12, a storage unit 13, a main memory 14, and the like. Symbol D in the storage unit 13 and main memory 14 indicates a device driver before and after loading, which is used for a multi-functional wireless card to be described later.

Reference numeral 20 denotes a wireless card which is inserted into the card slot 11 of the host 10 when it is used. The wireless card 20 includes an interface 21, card attribute storage unit 22, controller 23, storage unit 24, wireless communication unit 25, and the like.

In a first scheme, the wireless card 20 realizes a single-function mode that implements HCI alone, and a multi-function mode that further implements L2CAP as a higher-level protocol stack by the controller 23 and storage unit 24. One of the single-function mode and the multi-function mode can be selected by the interface 21.

In a second scheme, the wireless card 20 realizes a single-function mode that implements HCI alone, and a multi-function mode that implements L2CAP which forms a higher-level protocol stack, and Profile which provides higher-level services, by the controller 23 and storage unit 24. One of the single-function mode and the multi-function mode is selected (and a function mode in the multi-function mode is selected when the multi-function mode is selected) by the interface 21.

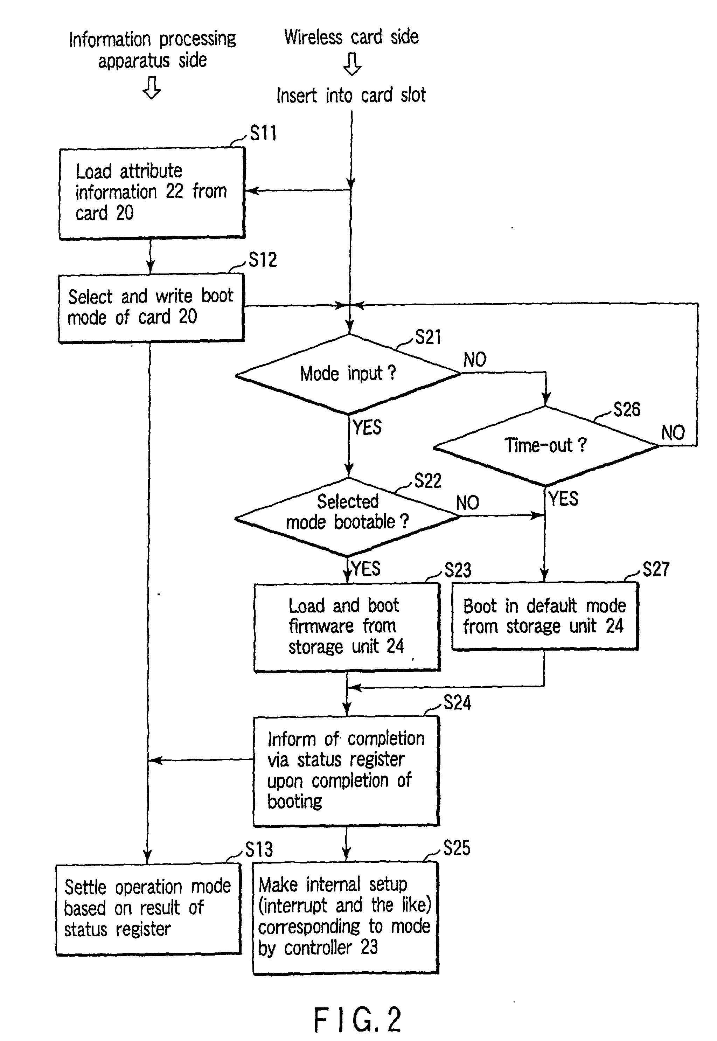

FIG. 2 is a flow chart showing the processing sequence from insertion to boot of the wireless card 20 in this embodiment. In FIG. 2, steps S11 to S13 correspond to processes on the host 10 side, and steps S21 to S27 correspond to processes on the wireless card 20 side.

The operation from insertion to boot of the wireless card 20 in the embodiment of the present invention will be described below with reference to these figures. In this case, assume that the first scheme is applied.

On the host 10 side, the following processes are executed.

That is, when the wireless card 20 is inserted into the card slot 11, the host 10 loads card attribute information stored in the card attribute storage unit 22 of the wireless card 20 via the interface 21 (step S11 in FIG. 2).

. A device driver (D) of the host is loaded from the storage unit 13 onto the main memory 14 on the basis of the card attribute information loaded from the card attribute storage unit 22. This device driver assures host-side resources (I/O port, memory, interrupt) required to use the wireless card 20. The device driver determines an operation mode of the wireless card 20 in an initialization sequence of the wireless card 20, and writes that mode (by a process for writing a value indicating the mode in a register) (step S12). The subsequent operation is settled based on the mode selection result (successful/unsuccessful) at that time (step S13).

On the other hand, the following processes are performed for the wireless card 20.

That is, after the wireless card 20 is inserted into the card slot 11 of the host 10, the control waits until the device driver (D) of the host 10 writes a value (value indicating the operation mode) indicating whether to boot the card in a single-function mode (HCI mode) or multi-function mode (L2CAP mode) in a mode select register, which is assigned in advance to the interface 21 (step S21).

The controller 23 of the wireless card 20 looks up the value written in the interface 21, loads firmware required for the corresponding operation mode from the storage unit 24, and starts a boot process (steps S22 and S23).

In this case, if no write access is made for a predetermined period of time or more, the card is booted in a default operation mode (e.g., single-function mode (HCI mode)) (steps S26 and S27).

Upon completion of boot of all required functions, the controller 23 of the wireless card 20 sends a message indicating this to the device driver (D) of the host 10 via a status register or the like of the interface 21 in the form of a successful/unsuccessful mode selection message (step S24).

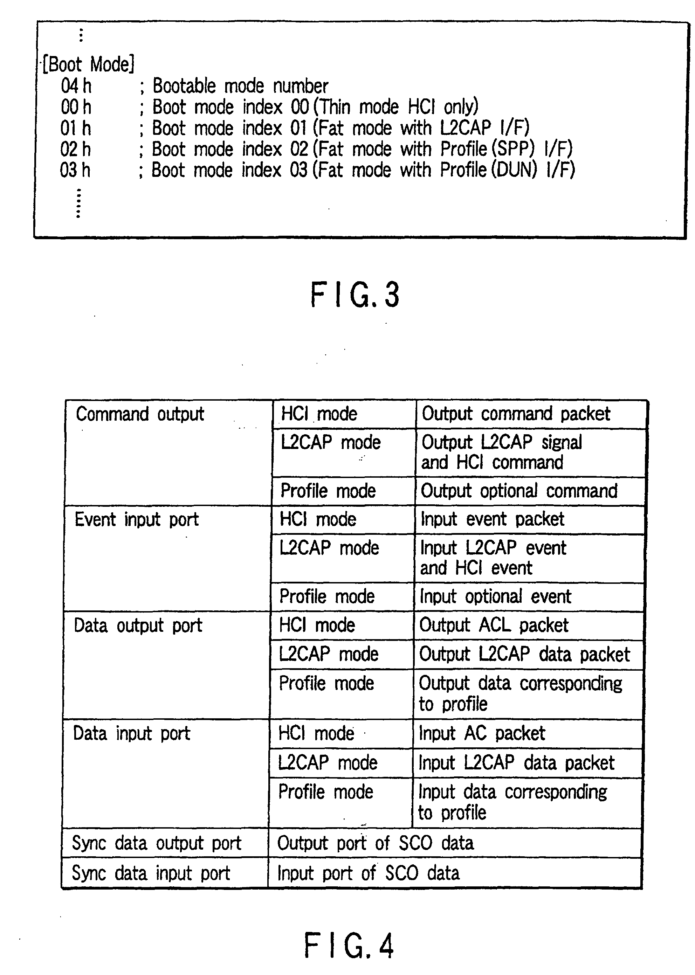

The second scheme will be explained below with reference to FIGS. 1 and 2, and also to FIGS. 3 to 6.

In this case, the wireless card 20 in which the HCI mode is assigned to the single-function mode, and the L2CAP mode as a higher-level protocol stack, and a Profile mode that provides higher-level services are assigned to the multi-function mode is realized.

That is, the wireless card 20 shown in FIG. 1 realizes the single-function mode that implements HCI alone, and the multi-function mode that implements L2CAP which forms a higher-level protocol stack and higher-level Profile, by the controller 23 and storage unit 24. One of the single-function mode and the multi-function mode is selected (and a function mode in the multi-function mode is selected when the multi-function mode is selected) by the interface 21.

To realize such a wireless card 20, the host 10 acquires the number of selectable indices, and writes an index number of an operation mode/service to be booted in the interface 21 of the wireless card 20 to select that operation mode/service (step S12 in FIG. 2).

FIG. 3 shows a detailed description example of card attribute information (only the portion associated with the present invention) loaded by the host 10.

In this case, a mode (Profile mode = Index 02, Index 03) that implements higher-level services (various Profiles based on the Bluetooth specifications such as RFCOMM, dial-up network (DUN), facsimile (Fax), LAN, and the like) is defined in addition to the single-function mode (HCI mode = index 00), and the multi-function mode (L2CAP mode = Index 01).

The controller 23 of the wireless card 20 loads and boots the selected mode or service, and writes it in the interface 21. Furthermore, the controller 23 checks resources on the host side (I/O port, memory, interrupt) in accordance with the active mode or service, and sets the types of data and commands to be exchanged via the interface 21 to operate the card (step S25 in FIG. 2).

In this way, data entities to be exchanged with the resources on the host side are changed in collaboration with the device driver (D) of the host 10.

For the boot modes shown in FIG. 3, an example of port specifications shown in FIG. 4 may be used. For example, a command output port is used to output command packets in the HCI mode; to output an L2CAP signal and HCI commands in the L2CAP mode; and to output optional commands in the Profile mode. An event input port is used to input event packets in the HCI mode; to input L2CAP events and HCI events in the L2CAP mode; and to input optional events in the Profile mode. A data output port is used to output ACL packets in the HCI mode; to output L2CAP data packets in the L2CAP mode; and to output data corresponding to Profile in the Profile mode. A data input port is used to input ACL packets in the HCI mode; to input L2CAP data packets in the L2CAP mode; and to input data corresponding to Profile in the Profile mode. Furthermore, sync data output and input ports are always used to output and input SCO (Synchronous Connection Oriented) data irrespective of the mode selected.

When a plurality of basic I/O ports are prepared, the operations of various multi-function modes can be assured without acquiring many resources on the host side (e.g., using different I/O ports for respective modes).

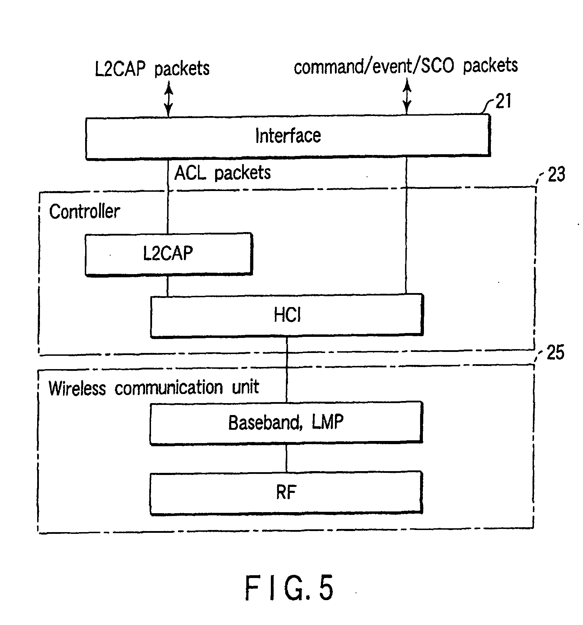

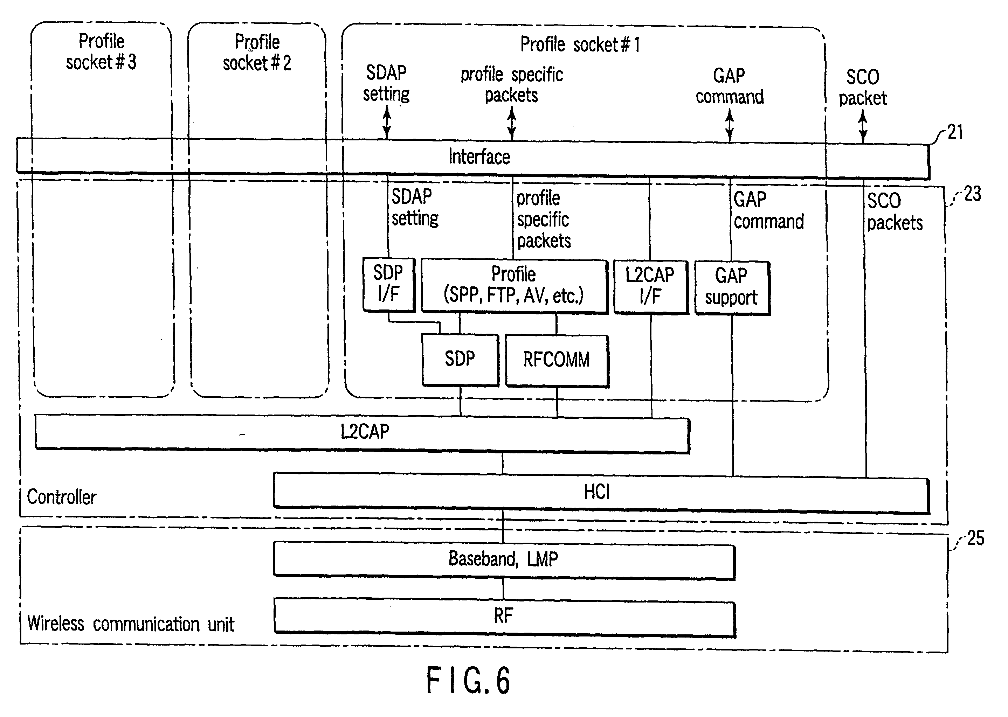

FIG. 5 shows a connection arrangement of the respective units of the wireless card 20 in the L2CAP mode, and FIG. 6 shows a connection arrangement of the respective units in the Profile mode.

Profile, SDP, L2CAP, HCI blocks and the like in FIGS. 5 and 6 are designed according to the Bluetooth standards. Note that ACL (Asynchronous Connection Less), GAP (Generic Access Profile), SPP (Serial Port Profile), SDAP (Service Discovery Application Profile), FTP (File Transfer Profile), and the like also comply with specifications specified by the Bluetooth profile specification.

In the Profile mode, since the type of Profile can be uniquely determined by data to be input/output, data to be input/output from the interface 21 can be distributed for each individual Profile. In this way, different Profile functions can operate at the same time.

When a plurality of Profiles are to be operated, a Profile to be booted must be designated after the Profile mode is booted. For this purpose, a Profile boot command is set, or a plurality of indices set for respective Profiles are written, and the controller 23 returns status according to the booted Profile to the host 10 every time the Profile is booted (by repeating steps S12 and S13 and steps S21 to S24 in FIG. 2). In this way, the host 10 and wireless card 20 can manage the booted Profiles.

In the Profile mode, a socket interface-like arrangement and data packets may be defined, as shown in FIG. 6. Upon booting a Profile, a socket number is assigned to a fixed field such as a header or the like of a data packet for each Profile to be booted, and is interpreted to control the Profile to be booted. In this way, the Profiles can be identified by socket numbers in data packets, and a plurality of identical Profiles can be booted on the wireless card 20 side.

Also, in the Profile mode, when L2CAP and SDP interfaces (for which different commands and packet formats are prepared) without the intervention of a Profile controller are assured, as shown in FIG. 6, a change in setup of SDP and exchange of L2CAP level data can be independently attained. Since SCO data is directly coupled to HCI in either the L2CAP or Profile mode, as shown in FIGS. 5 and 6, it can be exchanged via the dedicated input/output ports after an SCO link has been established.

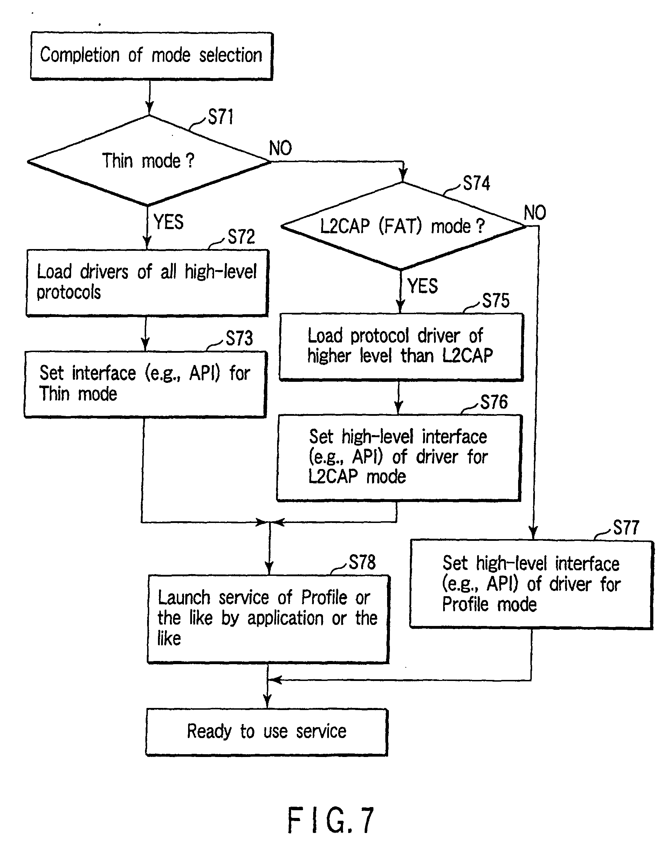

Another scheme will be explained below with reference to FIGS. 1 to 6 and also FIG. 7.

In this scheme, the host 10 includes a device driver loader which selects the operation mode of the wireless card 20 based on the attribute information upon insertion of the wireless card 20 into the host 10, and selects and boots higher-level software having a function required for the host in accordance with the selected operation mode so as to interlock the processing function with the operation mode of the wireless card 20.

The device driver (D) of the host 10 is loaded by an operating system (OS), and its subsequent operation is settled upon completion of mode selection by the process shown in FIG. 2. In the Profile mode, most of operations are executed on the wireless card 20 side. In such mode, the device driver (D) need only execute a process for converting data from an application or the like into input/output data for a device. Therefore, a higher-level device driver is loaded from a device driver having mode selection & device boot functions depending on the mode. FIG. 7 shows the processing sequence of the device driver (D) for this purpose.

The processing load on the host 10 becomes heaviest when the wireless card 20 is in the single-function (Thin) mode (HCI mode alone in this embodiment). In this case, drivers of all higher-level drivers (protocol stacks and the like) must be loaded in correspondence with services the host side uses (steps S71 and S72). After the process of prompting to load drivers, the device driver sets an application interface to a partner driver as its higher-level driver for the HCI mode (step S73).

In the multi-function (FAT) mode (L2CAP and Profile modes in this embodiment) in which many processes are performed in the wireless card 20, the processing load on the device driver (D) of the host 10 is reduced, and few drivers need be loaded. In this case, the device driver prompts to load drivers in correspondence with the current mode (steps S74 and S75) and sets an interface to a higher-level driver (steps S76 and S77). Finally, drivers up to applications and the like that directly provide services such as a Web browser, terminal software, and the like, are loaded. The Profile mode becomes ready to use immediately after the first driver provides an interface to an application.

In this way, since the host 10 includes the device driver loader which selects the operation mode of the wireless card 20 based on the attribute information upon insertion of the wireless card 20 into the host 10, and selects and boots higher-level software having a function required for the host in accordance with the selected operation mode so as to interlock the processing function with the operation mode of the wireless card, the host can make preparations without loading unnecessary device drivers.

As described above, according to the above embodiment, the wireless device (e.g., wireless card) 20, which complies with the Bluetooth standards and can establish connection to the host 10, includes the controller 23 for controlling a communication with the host 10, and the controller 23 can be operated in an operation mode that implements a communication with the host 10 by the host controller interface (HCI) and an operation mode that implements a communication with the host 10 by the logical link layer (L2CAP), thus realizing an easy-to-use wireless device which can flexibly cope with the system arrangement on the host side.

Also, according to the above embodiment, the wireless device (e.g., wireless card) 20, which complies with the Bluetooth standards and can establish connection to the host 10, includes the controller 23 for controlling a communication with the host 10, and the controller 23 can be operated in an operation mode that implements a communication with the host 10 by the host controller interface (HCI) and an operation mode that implements a communication with the host 10 by the Profile, thus realizing an easy-to-use wireless device which can flexibly cope with the system arrangement on the host side.

Furthermore, according to the above embodiment, the wireless device (e.g., wireless card) 20, which complies with the Bluetooth standards and can establish connection to the host 10, includes the controller 23 for controlling a communication with the host 10, and the controller 23 can be operated in an operation mode that implements a communication with the host 10 by the host controller interface (HCI) and an operation mode that implements a communication with the host 10 by the logical link layer (L2CAP) and the Profile, thus realizing an easy-to-use wireless device which can flexibly cope with the system arrangement on the host side.

As described in detail above, according to the present invention, it becomes possible to provide an easy-to-use wireless device, which is used upon exchanging data among a plurality of devices, and which can greatly reduce the load on the host side that uses the wireless device since it can switch between a single-function mode and multi-function mode, and can easily implement multi-functions.

Also, according to the present invention, it becomes possible to provide an easy-to-use wireless card, which is attachable to a host via a memory card slot or the like, and complies with the Bluetooth standards, and which can greatly reduce the load on the host side, and can arbitrarily selectively use a single-function mode that implements only HCI, and a multi-function mode that implements L2CAP, Profile, and the like in correspondence with the performance of a device driver on the host side.

Furthermore, according to the present invention, it becomes possible to provide an information processing apparatus, which exchanges data using a wireless device, and which can facilitate use of a wireless device having a multi-function mode, and can simply and easily implement various wireless communication functions by effectively using the wireless device having the multi-function mode.

Moreover, according to the present invention, it becomes possible to provide a device driver load method for an information processing apparatus that can connect a wireless device via an interface, which can obviate the need for loading unnecessary device drivers on the information processing apparatus side, and can automatically prepare for a single-function mode or multi-function mode so as to use the connected wireless device.

According to the present invention, a wireless device, which complies with the Bluetooth standards and is connectable to a host, includes a controller configured to control a communication with the host, and the controller can be operated in a first operation mode that implements a communication with the host by the host controller interface, and a second operation mode that implements a communication with the host by the logical link layer, thus realizing an easy-to-use wireless device which can flexibly cope with the system arrangement on the host side.

Furthermore, according to the present invention, a wireless device, which complies with the Bluetooth standards and is connectable to a host, includes a controller configured to control a communication with the host, and the controller can be operated in a first operation mode that implements a communication with the host by the host controller interface, and a second operation mode that implements a communication with the host by the Profile, thus realizing an easy-to-use wireless device which can flexibly cope with the system arrangement on the host side.

Moreover, according to the present invention, a wireless device, which complies with the Bluetooth standards and is connectable to a host, includes a controller for controlling a communication with the host, and the controller can be operated in a first operation mode that implements a communication with the host by the host controller interface, and a second operation mode that implements a communication with the host by the logical link layer and Profile, thus realizing an easy-to-use wireless device which can flexibly cope with the system arrangement on the host side.

## Claims

1. A device (20) attachable to a host (10), comprising:
an interface unit (21) configured to receive data indicating an operation mode to be selected from the host; and
a controller (23) configured to select one of a first operation mode and a second operation mode in accordance with the data received by said interface unit (21), and execute the selected operation mode;
**characterized in that** the device (20) is a wireless device;
the first operation mode is an operation mode corresponding to a single protocol stack, and
the second operation mode is an operation mode corresponding to a plurality of protocol stacks,
wherein said device (20) includes a wireless card complying with Bluetooth standards, and
the first operation mode implements at least a host controller interface, and the second operation mode implements at least one of a logical link layer and a profile.

2. The device according to claim 1, **characterized in that** said interface unit (21) is adapted to distribute the data in accordance with the selected operation mode.

3. The device according to claim 1, **characterized in that** said controller (23) is capable of booting a plurality of different profiles for each service in the second operation mode.

4. The device according to claim 1, **characterized in that** said controller (23) is capable of booting a plurality of identical profiles in the second operation mode by assigning unique socket numbers to the plurality of identical profiles and distributing data packets using the socket numbers.

5. The device according to claim 1, **characterized in that** said an interface unit (21) is directly coupled to the logical link layer during booting of the profile to communicate with the logical link layer.

6. The device according to claim 1, **characterized in that** said interface unit (21) is directly coupled to a service discovery protocol during booting of the profile to change setup information of a service.

7. The device according to claim 1, **characterized in that** said interface unit (21) is directly coupled to the host controller interface to transfer synchronous connection oriented (SCO) data.

8. The device according to claim 1, **characterized in that**:
communication with the host is executed by the host controller interface in the first operation mode, and communication with the host is executed by the logical link layer in the second operation mode.

9. The device according to claim 1, **characterized in that**:
communication with the host is executed by the host controller interface in the first operation mode, and communication with the host is executed by the profile in the second operation mode.

10. The device according to claim 1, **characterized in that**:
communication with the host is executed by the host controller interface in the first operation mode, and communication with the host is executed by the logical link layer and a profile in the second operation mode.

## Patentansprüche

1. Vorrichtung (20), die an einem Host (10) anbringbar ist, mit:
einer Schnittstelleneinheit (21), die konfiguriert ist, um Daten aufzunehmen, die einen Betriebsmodus angeben, der von dem Host auszuwählen ist; und
einem Controller (23), der konfiguriert ist, um einen ersten Betriebsmodus oder einen zweiten Betriebsmodus in Übereinstimmung mit den von der Schnittstelleneinheit (21) empfangenen Daten auszuwählen und den ausgewählten Betriebsmodus auszuführen;
**dadurch gekennzeichnet, dass**
die Vorrichtung (20) eine drahtlose Vorrichtung ist;
der erste Betriebsmodus ein Betriebsmodus ist, der einem einzelnen Protokoll-Stapel entspricht, und
der zweite Betriebsmodus ein Betriebsmodus ist, der einer Mehrzahl von Protokollstapeln entspricht,
wobei die Vorrichtung (20) eine drahtlose Karte umfasst, die Bluetooth-Standards erfüllt, und
der erste Betriebsmodus mindestens eine Hostcontrollerschnittstelle implementiert, und der zweite Betriebsmodus mindestens eine logische Verknüpfungsschicht und/oder ein Profil implementiert.

2. Vorrichtung gemäß Anspruch 1, **dadurch gekennzeichnet, dass** die Schnittstelleneinheit (21) angepasst ist, um die Daten in Übereinstimmung mit dem ausgewählten Betriebsmodus zu verteilen.

3. Vorrichtung gemäß Anspruch 1, **dadurch gekennzeichnet, dass** der Controller (23) imstande ist, eine Mehrzahl von unterschiedlichen Profilen für jeden Dienst in dem zweiten Betriebsmodus zu booten.

4. Vorrichtung gemäß Anspruch 1, **dadurch gekennzeichnet, dass** der Controller (23) imstande ist, eine Mehrzahl von identischen Profilen in dem zweiten Betriebsmodus durch zuweisen eindeutiger Socketnummern zu der Mehrzahl von identischen Profilen zu booten und Datenpakete mit den Socketnummern zu verteilen.

5. Vorrichtung gemäß Anspruch 1, **dadurch gekennzeichnet, dass** die Schnittstelleneinheit (21) direkt mit der logischen Verknüpfungsschicht während des Bootens des Profils gekoppelt ist, um mit der logischen Verbindungsschicht zu kommunizieren.

6. Vorrichtung gemäß Anspruch 1, **dadurch gekennzeichnet, dass** die Schnittstelleneinheit (21) direkt mit einem Dienstentdeckungsprotokoll während des Bootens des Profils gekoppelt ist, um die Setupinformation eines Dienstes zu ändern.

7. Vorrichtung gemäß Anspruch 1, **dadurch gekennzeichnet, dass** die Schnittstelleneinheit direkt mit der Hostcontrollerschnittstelle gekoppelt ist, um synchrone verbindungsorientierte Daten (SCO-Daten) zu übertragen.

8. Vorrichtung gemäß Anspruch, **dadurch gekennzeichnet, dass**:
eine Kommunikation mit dem Host durch die Hostcontrollerschnittstelle im ersten Betriebsmodus und eine Kommunikation mit dem Host durch die logische Verknüpfungsschicht in dem zweiten Betriebsmodus ausgeführt wird.

9. Vorrichtung gemäß Anspruch 1, **dadurch gekennzeichnet, dass**:
eine Kommunikation mit dem Host durch die Hostcontrollerschnittstelle in dem ersten Betriebsmodus und eine Kommunikation mit dem Host durch das Profil in dem zweiten Betriebsmodus ausgeführt wird.

10. Vorrichtung gemäß Anspruch 1, **dadurch gekennzeichnet, dass**:
eine Kommunikation mit dem Host durch die Hostcontrollerschnittstelle in dem ersten Betriebsmodus und eine Kommunikation mit dem Host durch die logische Verknüpfungsschicht und einem Profil im zweiten Betriebsmodus ausgeführt wird.

## Revendications

1. Dispositif (20) destiné à être fixé à une unité centrale (10), comprenant :
une unité d'interface (21) configurée de manière à recevoir des données indiquant un mode de fonctionnement devant être sélectionné à partir de l'unité centrale; et
un contrôleur (23) configuré de manière à sélectionner l'un d'un premier mode de fonctionnement et d'un second mode de fonctionnement en fonction des données reçues par ladite unité d'interface (21) et exécuter le mode de fonctionnement sélectionné;
**caractérisé en ce que** le dispositif (20) est un dispositif sans fil;
le premier mode de fonctionnement est un mode de fonctionnement correspondant à une seule pile de protocoles, et
le second mode de fonctionnement est un mode de fonctionnement comportant une pluralité de piles de protocoles,
dans lequel ledit dispositif (20) inclut une carte sans fil qui satisfait aux normes Bluetooth, et
le premier mode de fonctionnement met en oeuvre au moins une interface entre l'unité centrale et le contrôleur, et le second mode de fonctionnement met en oeuvre au moins une couche de liaison formant lien logique et un profil.

2. Dispositif selon la revendication 1, **caractérisé en ce que** ladite unité d'interface (21) est adaptée pour distribuer les données en fonction du mode de fonctionnement sélectionné.

3. Dispositif selon la revendication 1, **caractérisé en ce que** ledit contrôleur (23) est à même d'initialiser une pluralité de profils différents pour chaque service dans le second mode de fonctionnement.

4. Dispositif selon la revendication 1, **caractérisé en ce que** ledit contrôleur (23) est à même d'initialiser une pluralité de profils identiques dans le second mode de fonctionnement par affectation de numéros de prises uniques à la pluralité de profils identiques et de distribuer des paquets de données en utilisant les numéros de prises.

5. Dispositif selon la revendication 1, **caractérisé en ce que** ladite unité d'interface (21) est couplée directement à la couche formant lien logique pendant l'initialisation du profil de manière à communiquer avec la couche formant lien logique.

6. Dispositif selon la revendication 1, **caractérisé en ce que** ladite unité d'interface (21) est couplée directement à un protocole de découverte de services pendant l'initialisation du profil pour modifier l'information d'installation d'un service.

7. Dispositif selon la revendication 1, **caractérisé en ce que** ladite unité d'interface (21) est couplée directement à l'interface entre l'unité centrale et le contrôleur pour transférer des données orientées sur une connexion synchrone (SCO).

8. Dispositif selon la revendication 1, **caractérisé en ce que** :
la communication avec l'unité centrale est exécutée au moyen de l'interface entre l'unité centrale et le contrôleur dans le premier mode de fonctionnement, et la communication avec l'unité centrale est exécutée au moyen de la couche formant lien logique dans le second mode de fonctionnement.

9. Dispositif selon la revendication 1, **caractérisé en ce que** :
la communication avec l'unité centrale est exécutée au moyen de l'interface entre l'unité centrale et le contrôleur dans le premier mode de fonctionnement, et la communication avec l'unité centrale est exécutée au moyen du profil dans le second mode de fonctionnement.

10. Dispositif selon la revendication 1, **caractérisé en ce que** :
la communication avec l'unité centrale est exécutée au moyen de l'interface entre l'unité centrale et le contrôleur dans le premier mode de fonctionnement, et la communication avec l'unité centrale est exécutée au moyen de la couche formant lien logique et d'un profil dans le second mode de fonctionnement.
